# EUROPEAN PATENT SPECIFICATION

(11) **EP 1 396 448 B1**
(45) Date of publication and mention of the grant of the patent: **10.08.2005**
(21) Application number: 03425555.4
(22) Date of filing: 20.08.2003
(51) Int. Cl.: B65G 39/09

(54) **A device for anchoring rollers to roller tables**
Vorrichtung zur Verankerung von Rollen an einem Rollentisch
Dispositif d'ancrage de rouleaux dans une table à rouleaux

(30) Priority: 03.09.2002 IT MO20020240
(43) Date of publication of application: 10.03.2004
(73) Proprietor: Kemac S.p.A., 41042 Fiorano Modenese (Modena) (IT)
(72) Inventor: Laroma Iezzi, Mario, 42013 Casalgrande (Reggio Emilia) (IT)
(74) Representative: Gotra, Stefano

(56) References cited:
- EP-A- 0 554 632
- FR-A- 2 316 156
- US-A- 4 978 266
- US-A- 5 080 501
- US-A- 5 645 155
- US-A- 5 875 878
- US-B1- 6 302 255

## Description

Roller tables usually applied in ceramic tile production plants for stocking and transferring the tiles between the various work lines are, as is known, constituted by rectangular-based frames mounted on wheels, comprising roller planes located side-by-side, ends of which rollers are supported, rotatably freely, by the side walls of the frame. The tiles are loaded or unloaded onto or from the roller planes in a perpendicular direction to the roller plane axes, which rollers are then made to rotate by means of spindle ends supported on special spindles located in proximity and laterally of the roller tables, and translatable vertically and horizontally to bring the ends into contact with ends of the rollers projecting from the lateral walls of the roller table.

The distance between the roller tables, in the order of a few centimetres, and the overall dimensions of the roller tables are such that the number of rollers in each table is considerable; and the problems connected with mounting and dismounting of rollers and general maintenance of the tables are also considerable and important.

At present each single roller is rotatably constrained to the lateral walls of the roller table, using very simple means such as centrally toothed convex washers applied to the projecting ends of the rollers, or bushes with collars interpositioned between the rollers and the support walls (e.g. see document US-A-5080501).

Both of the above-described solutions guarantee the roller positioning in axial terms, as in both cases the devices used constitute means for constraining which are solidly constrained to the rollers while at the same time able to rotate with respect to the support wall, reacting with the external surface of the support walls so that, being positioned at both ends of the roller, they exactly determined the roller position with respect to the support walls.

The constraint between the devices and the relative roller is obtained by a forcing of the device onto the external surface of the end of the roller; this forcing produces permanent deformations on the external surface of the roller and stops the devices from moving in an external direction.

Obviously this constraint, undoubtedly simple and effective for normal use of the tables, becomes a cause of difficulties when the roller has to be dismounted for repair, replacement or the like.

The difficulties become even greater when it is necessary to perform maintenance on roller which are positioned high up on the table; thus it is easy to understand why solutions are needed to enable rapid and rational operations to be carried out on rollers in roller tables.

The main aim of the present invention is to provide a device which enables rapid and safe mounting and dismounting of rollers in roller tables normally used in ceramic tile production lines, and, in particular, to carry out rapidly and safely single roller mounting and dismounting operations independently of the other rollers in the table.

A further aim of the invention is to provide a device which enables easy coupling of the roller with the external roller drive devices.

The above aims are achieved by a device for anchoring and turning rollers in roller tables of the type normally used on production lines of ceramic tiles, comprising two coaxial bushes rotatably coupled and positioned at ends of each roller, a first bush being constrained to a lateral wall of the table by a click-release insertion in an opening offered in the lateral wall for support of the roller; a second bush, coupled rotatably with the first bush, comprises a cylindrical internal seating in which an end of a roller is housed, longitudinal cogging being provided in the cylindrical seating which engage in channels exhibited by the end of the roller; the second bush also being constrained axially with the first bush and being provided with means for rotatably coupling with a spindle end which is external of the roller table.

The first bush, which is mainly destined to define the axial position of the roller, exhibits, at an end thereof, a strike collar and, adjacent to the collar, an external circular seating a width of which corresponds to the width of the wall of the roller table, and a diameter of which is equal to a diameter of the circular opening afforded in the roller support wall; the cylindrical body of the bush exhibits a tapered external shape and longitudinal openings which are uniformly distributed to allow a degree of elastic diameter deformability of the cylindrical body.

At an opposite end from the strike collar end, the first bush exhibits a ring having a smaller-diameter than the internal diameter of the cylindrical body of the first bush, the ring being destined to engage in a circular seating afforded in the second bush which guarantees, during normal operation, a sufficient axial constraint between the first bush and the second bush, the axial constraint being releasable following an extracting action applied on the second bush sufficient to cause the elastic deformation of the first bushing and the consequent disengagement of the ring from the seating.

The second bush is provided with a central collar having a diameter which is equal to the diameter of the strike collar of the first bush. On an internal side with respect to the strike collar, the second bush exhibits a cylindrical body having an external diameter which couples in rotation with the first bush; at the end of the cylindrical body there is the circular seating for housing the terminal ring of the first bush. On an external side with respect to the collar, the second bush exhibits, along the axis, a substantially square clutch connection for coupling in rotation with a spindle end which is external of the roller table.

From the above description the advantages of the device of the invention are evident, and relate in particular to the rationality of the mounting of the device and the roller coupled thereto, as well as to the ease of dismounting deriving from the special design of the device itself.

Further characteristics and advantages of the present invention will better emerge from the detailed description that follows of a preferred but non-exclusive embodiment of the invention, illustrated purely by way of non-limiting example in the accompanying figures of the drawings, in which:
figure 1 is the device of the invention in an operative configuration;
figure 2 is an exploded view of some components of figure 1;
figures 3 and 4 respectively show a front view and a section according to line IV-IV of figure 3, of a component of the device of the invention;
figures 5 and 6 respectively show a front view and a section, according to line VI-VI of figure 5, of a second component of the device of the invention;
figure 7 shows the device according to the invention in a special operating configuration.

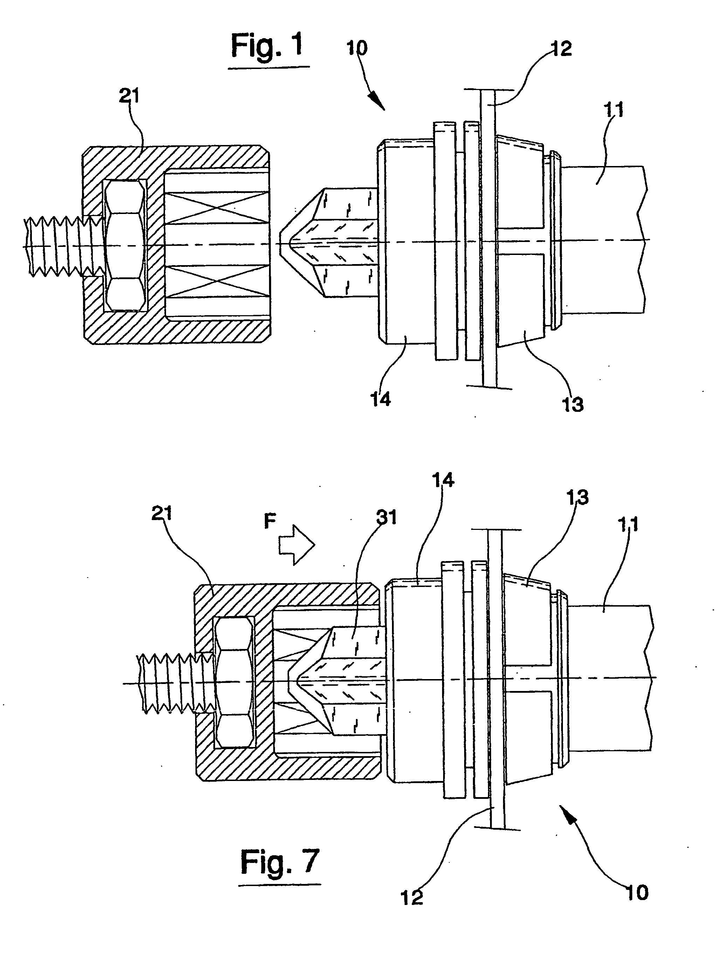

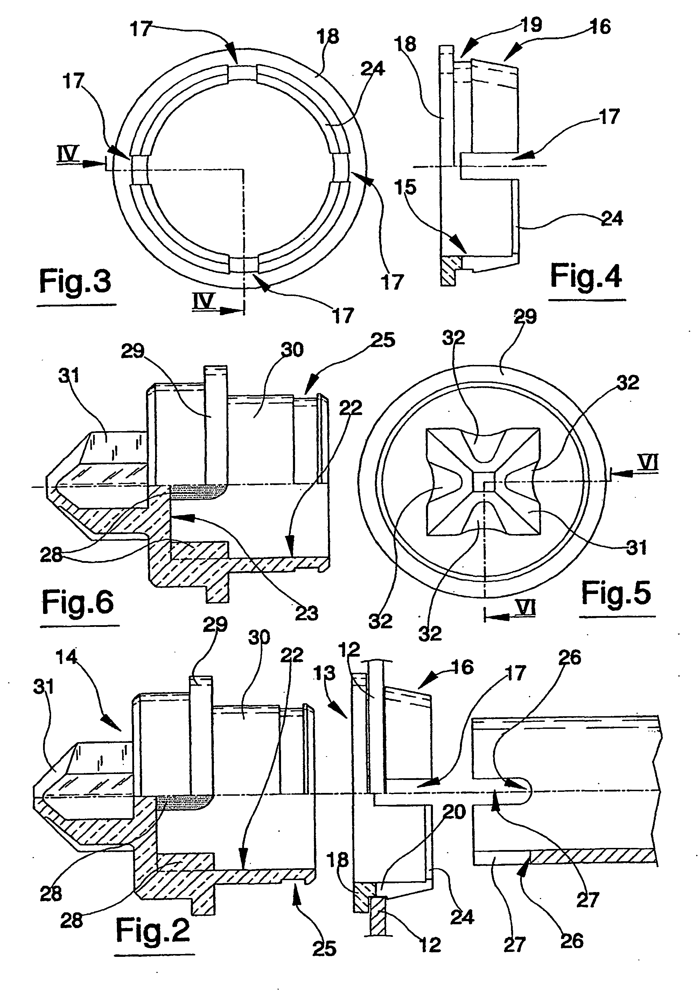

With reference to figure 1 of the drawings, 10 denotes in its entirety a device for mounting rollers 11 on lateral walls 12 of a roller table. The device 10 comprises a first bush 13 and a second bush 14, easily identified in the exploded view of figure 2.

The first bush 13 exhibits a cylindrical body 15 having a tapered external shape 16, in which uniformly-distributed longitudinal openings 17 are made. More precisely, in this case, as can be observed in figure 3, the openings are four in number and give the cylindrical body 15 a diametral elastic deformation capacity, which, as will be better described herein below, is useful during the roller mounting and dismounting operations.

A collar 18 is located at an end of the cylindrical body 15 of the first bush 13, which collar 18 contacts against the external surface of the lateral wall 12; a circular seating 19 is located adjacent to the collar 18 and has a width which corresponds to the width of the lateral wall 12 of the roller table, and a diameter which is equal to a diameter of the circular opening 20 afforded in the lateral wall 12 for supporting the roller 11. The edges of the opening 20 fit snugly into the seating 19 when the first bush 13 is positioned during mounting.

The insertion, from outside the roller table towards the inside, of the bush 13 in the circular opening 20 causes a diametral restriction of the cylindrical body 15 as, with its tapered external shaping 16, it drags against the edge of the opening, up until the striker collar 18 comes into contact with the lateral wall 12 and the external circular seating 19 is positioned at the opening 20.

The second bush 14 is destined mainly to transmit to the roller 11 the rotary motion coming from and external spindle end 21. The second bush 14 also contributes to defining the axial position of the roller. This houses in the internal cylindrical seating 22 of the second bush 14 and can displace axially up until it strikes against the bottom surface 23 of the cylindrical seating 22, or until bottoms 26 of longitudinal grooves 27 present at the end of the roller 11 come into contact with cogs 28 arranged along the periphery of the bottom surface 23 of the second bush 14; the cogs 28 insert into the grooves 27 and transmit drive to the roller 11 via the spindle end 21. The axial constraint of the second bush 14 with respect to the first bush 13 is achieved by a housing of a terminal ring 24 of the first bush 13 in a circular seating 25 of the second bush 14.

The housing of the terminal ring 24 in the circular seating 25 happens at the moment in which the second bush 14 is positioned in place, by insertion from the outside onto the end of the roller 11, coaxially to the first bush 13. The angular position of the second bush 14, at the moment of insertion, must be such that the longitudinal cogs 28 present in the terminal zone of the internal cylindrical seating 22 of the second bush 14 are exactly aligned with the grooves 27 present at the end of the roller 11. Also, at the moment of the insertion of the second bush 14 in the first bush 13, there is an elastic deformation of the terminal ring 24 of the first bush 13 before the terminal ring 24 lodges in the circular seating 25.

Externally the second bush 14 exhibits a collar 29, having a same diameter as the diameter of the collar 18 on the first bush 13; on an internal side with respect to the collar 29 the second bush 14 exhibits a cylindrical body 30 having an external diameter which couples rotatingly with the first bush 13 at the end of the cylindrical body 30, in the circular seating 25 of the first bush 13 for housing the terminal ring 24. On the external side with respect to the collar 29, the second bush 14 exhibits, along the axis thereof, a pyramidal coupling seating 31 having a substantially square section and illustrated clearly in figure 5. The coupling seating 31 is for rotating coupling with the external spindle end 21, once this spindle end 21 has been axially translated in direction F, the position shown in figure 7.

The lateral surfaces of the coupling seating 31 are provided, in a known way, with radial grooves 32.

The roller 11 can be dismounted from the roller table by extraction of the second bush 14 from the work position of figures 1 and 7. By applying a force of adequate intensity towards the outside on the collar 29 of the second bush 14, the terminal ring 24 of the first bush 13 is elastically deformed by a sufficient amount to allow passage of the terminal portion of the cylindrical body 30 of the second bush 14. Obviously special extracting tools can be used for this purpose.

Variations and modifications to the above can be brought to the invention while leaving the basic characteristics and advantages thereof unchanged, relating to the rationality of mounting and dismounting of the rollers from the roller table.

The axial length of each of the two bushes can be proportionally varied with respect to what is described above, while still guaranteeing a relative rotation zone between the cylindrical body 15 of the first bush 13 and the cylindrical body 30 of the second bush 14 which is sufficiently big.

The number and distribution of the longitudinal openings 17, present in the first bush 13, can obviously differ from what is illustrated in the figures of the drawings; the grooves 27 on the end of the roller, and the cogs 28 internally of the second bush 14 can also vary.

The coupling seating 31 can also take a different form as long as it is compatible with the shape of the spindle end 21 with which it will couple.

The materials used to make the two bushes 13 and 14 are preferably, in the illustrated embodiment, plastic with good structural resistance qualities, but can also be metal or a metal alloy.

## Claims

1. A device (10) for anchoring and turning rollers (11) in roller tables of a type normally used on ceramic tile production lines, whereby said device comprises a first bush (13) and a second bush (14) which are coaxial and couplable in rotation; the first bush (13) being constrained to a lateral wall (12) of the roller table by insertion in an opening (20) made in the lateral wall (12) for supporting the roller (11); the second bush (14) being rotatably coupled with the first bush (13) and comprising an internal cylindrical seating (22) in which an end of the roller (11) is housed; the second bush (14) is also provided with means (25) for axially constraining the first bush (13), said device **characterised in that** said second bush (14) is provided with means (31) for rotating coupling with a spindle end (21) which is external of the roller table, said first bush is constrained to said lateral wall of said roller table by click-release insertion in said openning (20), and longitudinal cogs (28) are provided in the cylindrical seating (22), for engaging in grooves (27) afforded in the end of the roller (11).

2. The device (10) of claim 1, **characterised in that** the first bush (13) exhibits, at an end thereof, a collar (18) for contacting against an external surface of the lateral wall (12) and also exhibits, adjacent to the collar (18), a circular seating (19) a width of which corresponds to a width of the lateral wall (12) of the roller table and a diameter of which is equal to a diameter of the opening (20) afforded in the lateral wall (12) for supporting the roller (11); a cylindrical wall (15) of the bush (13) exhibiting a tapered external shaping (16) and longitudinal openings (17) for allowing a degree of diametral elastic deformation of the cylindrical body (15).

3. The device (10) of claim 2, **characterised in that** the longitudinal openings (17) are four in number and are uniformly distributed in the cylindrical body (15) of the first bush (13).

4. The device (10) of claim 2 or 3, **characterised in that** the first bush (13) exhibits, at an opposite end to the collar (18), a ring (24) having a smaller diameter than an internal diameter of the cylindrical body (15) of the first bush (13), the ring (24) being destined to engage in a circular seating (25) afforded in the second bush (14) in order to guarantee, during normal roller table operation, a sufficient axial constraint between the first bush (13) and the second bush (14).

5. The device (10) of claim 4, **characterised in that** the axial constraint is removable following an extraction operation applied to the second bush (14), the extraction operation being of a sufficient entity to cause an elastic deformation of the cylindrical body (15) of the first bush (13) and a consequent disengagement of the terminal ring (24) from the circular seating (25).

6. The device (10) of any one of the preceding claims, **characterised in that** the second bush (14) exhibits a central collar (29) and internally with respect to the collar (29) a cylindrical body (30) having an external diameter which couples in rotation with the first bush (13), the circular seating (25) being located at an end of the cylindrical body (30) for housing the terminal ring (24) of the first bush (13).

7. The device (10) of claim 6, **characterised in that** the second bush (14) exhibits, on an external side with respect to the collar (29), a coupling seating (31) having a square section and being able to engage in rotation with the spindle end (21) external of the roller table.

## Patentansprüche

1. Vorrichtung (10) zur Verankerung und zum Drehen von Rollen (11) in Rollentischen von einem Typ, der normalerweise in Produktionsanlagen für Keramikfliesen verwendet wird, wobei die genannte Vorrichtung eine erste Buchse (13) und eine zweite Buchse (14) enthält, welche koaxial zueinander und in der Umdrehung miteinander verbindbar sind; wobei die erste Buchse (13) an einer Seitenwand (12) des Rollentisches durch Einsetzen in eine Öffnung (20) gehalten ist, eingearbeitet in die Seitenwand (12) zum Tragen der Rolle (11); wobei die zweite Buchse (14) drehbar mit der ersten Buchse (13) verbunden ist und einen internen zylindrischen Sitz (22) enthält, in welchem ein Ende der Rolle (11) aufgenommen ist; wobei die zweite Buchse (14) ebenfalls mit Mitteln (25) zur axialen Verbindung mit der ersten Buchse (13) versehen ist, wobei die genannte Vorrichtung **dadurch gekennzeichnet ist, dass** die genannte zweite Buchse (14) mit Mitteln (31) zur drehbaren Verbindung mit dem Ende einer Spindel (21) versehen ist, die sich ausserhalb des Rollentisches befindet, wobei die genannte erste Buchse an der genannten Seitenwand des genannten Rollentisches durch einen Schnappeinsatz in der genannten Öffnung (20) befestigt ist, und zwar durch längliche Verzahnungen (28), die in dem zylindrischen Sitz (22) zum Eingriff in an dem Ende der Rolle (11) aufgewiesene Rillen (27) vorgesehen sind.

2. Vorrichtung (10) nach Patentanspruch 1, **dadurch gekennzeichnet, dass** die erste Buchse (13) an einem Ende einen Bund (18) für den Anschlag gegen eine äussere Oberfläche der Seitenwand (12) aufweist, sowie ebenfalls, angrenzend an den Bund (18), einen kreisförmigen Sitz (19), dessen Breite einer Breite der Seitenwand (12) des Rollentisches entspricht und dessen Durchmesser gleich dem Durchmesser der Öffnung (20) ist, aufgewiesen in der Seitenwand (12) zum Tragen der Rolle (11); wobei eine zylindrische Wand (15) der Buchse (13) eine verjüngte äussere Form (16) aufweist, sowie längliche Öffnungen (17), um einen Grad von diametraler elastischer Verformung des zylindrischen Körpers (15) zu erlauben.

3. Vorrichtung (10) nach Patentanspruch 2, **dadurch gekennzeichnet, dass** die länglichen Öffnungen (17) vier in der Zahl und gleichmässig in dem zylindrischen Körper (15) der ersten Buchse (13) verteilt sind.

4. Vorrichtung (10) nach Patentanspruch 2 oder 3, **dadurch gekennzeichnet, dass** die erste Buchse (13) an einem entgegengesetzten Ende von dem Bund (18) einen Ring (24) aufweist, der einen kleineren Durchmesser hat als ein Innendurchmesser des zylindrischen Körpers (15) der ersten Buchse (13), wobei der Ring (24) dazu bestimmt ist, in einen kreisförmigen Sitz (25) zu greifen, der in der zweiten Buchse (14) aufgewiesen ist, um zu gewährleisten, dass während des normalen Betriebes des Rollentisches eine ausreichende Verbindung zwischen der ersten Buchse (13) und der zweiten Buchse (14) vorhanden ist.

5. Vorrichtung (10) nach Patentanspruch 4, **dadurch gekennzeichnet, dass** die axiale Verbindung lösbar ist durch eine auf die zweite Buchse (14) ausgeübte Ziehkraft, wobei die Ziehkraft von ausreichender Stärke ist, um eine elastische Verformung des zylindrischen Körpers (15) der ersten Buchse (13) zu bewirken und folglich eine Freigabe des Endringes (24) aus dem kreisförmigen Sitz (25).

6. Vorrichtung (10) nach einem beliebigen der vorstehenden Patentansprüche, **dadurch gekennzeichnet, dass** die zweite Buchse (14) einen mittleren Bund (29) aufweist und im Inneren im Verhältnis zu dem Bund (29) einen zylindrischen Körper (30) mit einem solchen Aussendurchmesser, dass er sich in der Umdrehung mit der ersten Buchse (13) verbindet, wobei der kreisförmige Sitz (25) an einem Ende des zylindrischen Körpers (30) angeordnet ist, um den Endring (24) der ersten Buchse (13) aufzunehmen.

7. Vorrichtung (10) nach Patentanspruch 6, **dadurch gekennzeichnet, dass** die zweite Buchse (14) an einer äusseren Seite im Verhältnis zu dem Bund (29) einen Verbindungssitz (31) aufweist, der einen viereckigen Querschnitt hat und in der Lage ist, sich in der Umdrehung mit dem Ende der ausserhalb des Rollentisches liegenden Spindel (21) zu verbinden.

## Revendications

1. Dispositif (10) d'ancrage et d'entraînement de rouleaux (11) dans des tables à rouleaux du type utilisé sur des lignes de production de carreaux en céramique, dans lequel ledit dispositif comprend une première bague (13) et une seconde bague (14) qui sont coaxiales et peuvent être accouplées en rotation; la première bague (13) étant fixée à une paroi latérale (12) de la table à rouleaux par insertion dans une ouverture (20) formée dans la paroi latérale (12) pour supporter le rouleau (11); la seconde bague (14) étant accouplée en rotation avec la première bague (13) et comprenant un logement cylindrique interne (22) dans lequel une extrémité du rouleau (11) est logée; la seconde bague est également pourvue de moyens (25) pour fixer axialement la première bague (13), ledit dispositif étant **caractérisé en ce que** ladite seconde bague (14) est pourvue de moyens (31) d'accouplement rotatif avec un mandrin (21) externe à la table à rouleaux, ladite première bague étant fixée à ladite paroi latérale de ladite table à rouleaux par insertion à encliquetage dans ladite extrémité (21), sur des dents longitudinales (28) qui sont prévues dans le logement cylindrique (22), pour s'engager dans des rainures (27) formées dans l'extrémité du rouleau (11).

2. Dispositif (10) selon la revendication 1, **caractérisé en ce que** la première bague (13) présente, sur une de ses extrémités, une bague (18) de contact contre une surface externe de la paroi latérale (12) et présente également, adjacent à la bague (18), un logement circulaire (19) dont une profondeur correspond à une profondeur de la paroi latérale (12) de la table à rouleaux et un diamètre duquel est égal à un diamètre de l'ouverture (20) formée dans la paroi latérale (12) pour supporter le rouleau (11); une paroi cylindrique (15) de la bague (13) présente un profil externe fuselé (16) et des ouvertures longitudinales (17) pour permettre un degré de déformation élastique diamétrale du corps cylindrique (15).

3. Dispositif (10) selon la revendication 2, **caractérisé en ce que** les ouvertures longitudinales (17) sont au nombre de quatre et sont uniformément distribuées dans le corps cylindrique (15) de la première bague (13).

4. Dispositif (10) selon la revendication 2 ou 3, **caractérisé en ce que** la première bague (13) présente, sur une extrémité opposée de la bague (18), un anneau (24) ayant un diamètre inférieur à un diamètre interne du corps cylindrique (15) de la première bague (13), l'anneau (24) étant destiné à s'engager dans un logement circulaire (25) formé dans la seconde bague (14) de manière à garantir, pendant le fonctionnement normal de la table à rouleaux, une contrainte axiale suffisante entre la première bague (13) et la seconde bague (14).

5. Dispositif (10) selon la revendication 4, **caractérisé en ce que** la contrainte axiale est amovible suivant une opération d'extraction accomplie sur la seconde bague (14), l'opération d'extraction étant d'entité suffisante pour causer une déformation élastique du corps cylindrique (15) de la première bague (13) et un désengagement conséquent de l'anneau terminal (24) du logement circulaire (25).

6. Dispositif (10) selon n'importe laquelle des revendications précédentes, **caractérisé en ce que** la seconde bague (14) présente une bague centrale (29) et, du côté interne par rapport à la bague (29), un corps cylindrique (30) ayant un diamètre externe qui s'accouple en rotation avec la première bague (13), le logement circulaire (25) étant disposé sur une extrémité du corps cylindrique (30) pour loger l'anneau terminal (24) de la première bague (13).

7. Dispositif (10) selon la revendication 6, **caractérisé en ce que** la seconde bague (14) présente, sur un côté externe par rapport à la bague (29), un logement d'accouplement (31) de section carrée et pouvant s'engager en rotation avec le mandrin (21) externe à la table à rouleaux.
